(19) Europäisches Patentamt
European Patent Office
Office européen des brevets

(11) **EP 1 001 191 A2**

(12) **EUROPÄISCHE PATENTANMELDUNG**

(43) Veröffentlichungstag:
**17.05.2000 Patentblatt 2000/20**

(51) Int. Cl.[7]: **F16H 61/00**

(21) Anmeldenummer: **99119249.3**

(22) Anmeldetag: **28.09.1999**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **13.11.1998 DE 19852374**

(71) Anmelder:
**Bayerische Motoren Werke Aktiengesellschaft
80809 München (DE)**

(72) Erfinder: **Jung, Thomas
85757 Karlsfeld (DE)**

(74) Vertreter: **Zollner, Richard et al
Bayerische Motoren Werke AG
Patentabteilung AJ-3
80788 München (DE)**

(54) **Verfahren zum Steuern einer Kupplung eines automatischen Getriebes**

(57)   Die Erfindung betrifft ein Verfahren zur Steuerung einer Kupplung eines automatischen Getriebes, bei dem Fahrzeugbetriebsgrößen, wie das Antriebsmoment, der Drosselklappenwinkel oder die Fahrpedalstellung, die An- und Abtriebsdrehzahl des Getriebes, erfaßt und einer Steuerungseinrichtung zugeführt werden, die einen Kupplungsdruck bestimmt.

Um auch stochastisch auftretende Störungen erfassen und beseitigen zu können, wird vorgeschlagen, zumindest unter Berücksichtigung der Motordrehzahländerung ein Korrekturkupplungsdruck zu bestimmen, der zusammen mit dem Kupplungsdruck einen korrigierten Soll-Kupplungsdruck ergibt.

EP 1 001 191 A2

**Beschreibung**

Die Erfindung betrifft ein Verfahren zum Steuern einer Kupplung eines automatischen Getriebes.

Solche Verfahren sind in großer Vielzahl bekannt. Dabei wird insbesondere der Kupplungsdruck in Abhängigkeit von verschiedenen Fahrzeugbetriebsbedingungen berechnet und in einer gewünschten Weise gesteuert oder geregelt.

Treten Störgrößen bei den Eingangsparametern auf, so werden diese möglichst ausgeglichen. Beispielsweise ist aus der US 5,291,979 eine Steuerungsvorrichtung für die Kupplung eines automatischen Getriebes bekannt, bei der ein bestimmter Schlupf zwischen einem Laufrad und der Turbine eines automatischen Getriebes eingestellt werden soll. Dabei wird eine Motordrehzahländerung zur Bestimmung einer Schaltzeitdauer überwacht.

Problematisch bei den automatischen Getrieben sind nicht erfaßbare Störgrößen. Bisherige Adaptionen bei der Kupplungssteuerung sind lediglich für die Anpassung an Toleranzen oder Verschleiß geeignet. Bei stochastisch auftretenden Störungen erfolgt zumeist eine zu späte Adaption, welche auch dann noch wirkt, wenn die Störung längst nicht mehr vorliegt.

Aufgabe der Erfindung ist es daher, ein Verfahren der eingangs genannten Art anzugeben, bei der auch stochastische Störungen schnell erfaßt und beseitigt und damit eine optimale Anpassung an äußere Einflüsse gewährleistet.

Diese Aufgabe wird durch die in Anspruch 1 angegebenen Merkmale gelöst.

Insbesondere wird ein Korrekturkupplungsdruck aus der Motordrehzahländerung berechnet, wobei der Korrekturkupplungsdruck zusammen mit einem normal aus Fahrzeugbetriebsgrößen berechneten Kupplungsdruck einen korrigierten Soll-Kupplungsdruck ergibt, mit dem die Kupplung des automatischen Getriebes beaufschlagt wird.

Vorzugsweise werden zur Berechnung des Korrekturkupplungsdruckes weitere Systemdaten verwendet. Bei diesen Systemdaten kann es sich beispielsweise um die Nabenposition der Kupplung, den Kupplungsdruck des vorigen Rechendurchlaufs und das Motormoment handeln. Es ist jedoch auch die Verwendung von weiteren Systemdaten möglich.

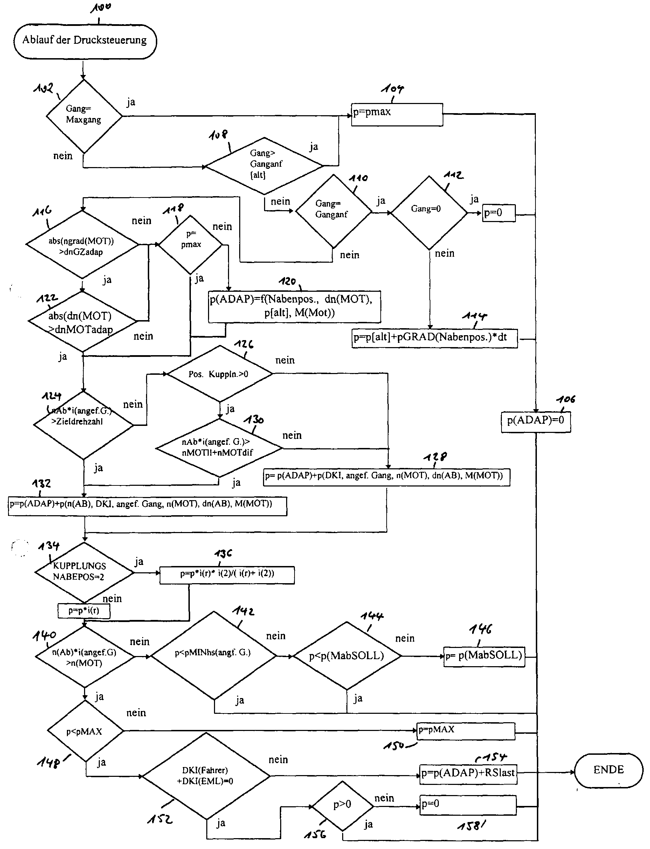

Die Erfindung wird nachfolgend anhand eines Ausführungsbeispiels mit Bezug auf die einzige Zeichnung näher erläutert. Die Zeichnung zeigt ein Ablaufdiagramm für eine Drucksteuerung.

Das Ablaufdiagramm wird von einem Steuergerät abgearbeitet. Das Steuergerät erhält in herkömmlicher Weise die entsprechenden Eingangsgrößen und gibt den Soll-Kupplungsdruck wie nachfolgend beschrieben aus.

In Schritt 100 beginnt der Ablauf der Drucksteuerung. Anschließend wird in Schritt 102 geprüft, ob es sich bei dem eingelegten oder geschalteten Gang um eine maximale Gangstufe (Maxgang) handelt. Die maximale Gangstufe stellt den höchsten einzulegenden Gangwert dar.

Ist diese Prüfung positiv (ja), so wird in Schritt 104 der Kupplungssolldruck p gleich dem Maximaldruck (pmax) gesetzt. Im weiteren Verlauf wird der Adaptions- oder Korrekturdruck p(ADAP) gleich 0 gesetzt (Schritt 106).

Ist die Prüfung in 102 jedoch negativ (nein), so wird in Schritt 108 geprüft, ob der eingelegte Gang größer ist als die beim vorherigen Rechendurchlauf ermittelte Ganganforderung (Ganganf[alt]).

Ist die Prüfung in Schritt 108 positiv, so wird zu Schritt 104 verzweigt.

Ist die Prüfung in Schrift 108 negativ, so wird zu Schrift 110 verzweigt, wo geprüft wird, ob der eingelegte Gang gleich der Ganganforderung (Ganganf) ist. Ist die Prüfung in Schritt 110 positiv, so wird in Schritt 112 geprüft, ob ein Leerlauf eingelegt ist (Gang = 0). Ist dies der Fall (ja), so wird der Kupplungssolldruck p in Schritt 113 gleich 0 gesetzt (p = 0).

Wird in Schrift 112 festgestellt, daß der eingelegte Gang nicht der Leerlaufgang ist (nein), so wird in Schritt 114 ein Kupplungssolldruck p berechnet, der sich aus dem vorherigen Kupplungsdruck (p[alt]), sowie dem Druckgradienten in Abhängigkeit von der Nabenposition innerhalb eines bestimmten Zeitraums bis zum nächsten Rechenzyklus bestimmt.

$$p = p[alt] + Pgrad\ (Nabenpos.)*dt$$

Anschließend wird zu Schritt 106 verzweigt und der Adaptionskupplungsdruck auf 0 eingestellt (p(ADAP)=0).

Ist die Prüfung in Schritt 110 negativ gewesen, so wird zu Schritt 116 verzweigt, in dem geprüft wird, ob der Absolutwert der Motordrehzahlgradientenvorgabe abs(ngrad(MOT)) größer ist als ein Motordrehzahlgradienten-Grenzwert dnGZadap. Oberhalb dieses Grenzwerts wird der Adaptionsdruck nicht neu berechnet.

Ist die Prüfung in Schritt 116 negativ, so wird Schritt 118 geprüft, ob p gleich dem Maximalkupplungsdruck pmax ist.

Ist dies nicht der Fall (nein), so wird in Schritt 120 der Adaptionsdruck p(ADAP) als Funktion unter anderem von dem Motordrehzahlgradienten dn(MOT) berechnet. Bei dieser Funktion werden im vorliegenden Beispiel darüber hinaus auch die Nabenposition der Kupplung, der Kupplungsdruck beim vorhergehenden Rechendurchlauf sowie das Motormoment berücksichtigt.

Insbesondere wird folgende Formel verwendet:

$$p(ADAP) = K2 \cdot (M(Mot) - K1 \cdot \theta(Mot) \cdot \frac{\Delta n}{\Delta t}),$$

wobei K1 und K2 Parameter des Systems darstellen, in denen unter anderem die obengenannten Größen integriert sind, M(Mot) dem Motormoment entspricht, $\Theta$(Mot) dem Motorträgheitsmoment entspricht und $\frac{\Delta n}{\Delta t}$ die Drehzahländerung in einem Zeitraum zum Ausdruck bringt.

Anschließend wird zu Schritt 124 verzweigt.

Ist die Prüfung in Schritt 118 positiv, wird sofort zu Schritt 124 verzweigt.

Ist die Prüfung in Schritt 116 positiv, so wird zu Schritt 122 verzweigt, bei dem geprüft wird, ob der Absolutwert des Motordrehzahlgradienten größer ist als ein Motordrehzahlgradientengrenzwert (dnMOTadap).

Ist die Prüfung in Schritt 122 negativ, so wird zu Schritt 118 verzweigt. Ist die Prüfung in Schritt 122 positiv (ja), so wird zu Schritt 124 verzweigt.

In Schritt 124 wird geprüft, ob die Abtriebsdrehzahl nAB multipliziert mit der Übersetzung des angeforderten Ganges i(angef.G) größer als eine Zieldrehzahl ist.

Ist dies nicht der Fall, so wird in Schritt 126 geprüft, ob die Position der Kupplungsnabe größer 0 ist. Ist dies nicht der Fall (nein), so wird zu Schritt 128 verzweigt, wo der Sollkupplungsdruck p aus dem Adaptionskupplungsdruck p(ADAP) und dem normal berechneten Kupplungsdruck p(DKI, angef.Gang, n(MOT), dn(AB), M(MOT) berechnet wird. Dabei sind DKI der Drosselklappenwert, Gang die eingelegte Gangstufe, n(MOT) die Motordrehzahl, dn(AB) der Gradient der Abtriebsdrehzahl und M(MOT) das Motormoment. Danach wird zu Schritt 134 verzweigt.

Ist das Ergebnis der Prüfung in Schritt 126 positiv (ja), so wird in Schritt 130 geprüft, ob die Abtriebsdrehzahl nAB multipliziert mit der Übersetzung des angeforderten Ganges i(angef.G.) größer ist als die Summe aus der Motorleerlaufdrehzahl nMOTII und einer Motordifferenzdrehzahl nMOTdif. Ist die Prüfung in Schritt 130 negativ, so wird zu Schritt 128 verzweigt.

Ist die Prüfung in Schritt 130 positiv, so wird zu Schritt 132 verzweigt, wo der Sollkupplungsdruck p als Summe aus dem Adaptionskupplungsdruck p(ADAP) und dem normal berechneten Kupplungsdruck p(n(AB), DKI, Gang, n(MOT), dn(AB), M(MOT) berechnet wird. Sodann wird zu Schritt 134 verzweigt.

In Schritt 134 wird geprüft, ob die Kupplungsnabenposition KUPPLUNGSNABEPOS gleich 2 ist. Ist dies der Fall (ja), so wird in Schritt 136 der Kupplungssolldruck p als der ursprüngliche Druck p multipliziert mit dem Übersetzungsverhältnis der Rückwärts-Gangstufe i(r) multiplizfiert mit dem Quotienten aus dem Übersetzungsverhältnis der Gangstufe 2 i(2) einerseits und der Summe aus der Rückwärts-Gangstufe i(r) und der Übersetzung der Gangstufe 2 i(2) andererseits berechnet. Sodann wird zu Schritt 140 verzweigt.

Ist die Prüfung in Schritt 134 negativ, so wird der Kupplungssolldruck p als der ursprüngliche Kupplungsdruck p multipliziert mit dem Übersetzungsverhältnis bei der Rückwärts-Gangstufe i(r) berechnet. Sodann wird ebenfalls zu Schritt 140 verzweigt.

In Schritt 140 wird geprüft, ob die Abtriebsdrehzahl n(AB) multipliziert mit dem Übersetzungsverhältnis der angeforderten Gangstufe i(angef.G) größer ist als die Motordrehzahl n(MOT). Ist dies nicht der Fall (nein), so wird in Schritt 142 geprüft, ob der Kupplungsdruck p kleiner ist als ein vom Gang abhängiger Minimaldruck bei der Hochschaltung pMINhs(angf.G). Ist dies nicht der Fall, so wird in Schritt 144 geprüft, ob der Kupplungsdruck p kleiner ist als der Druck bei einem maximal anzustrebenden Abtriebsmoment bei einer Hochschaltung p(MabSOLL). Ist dies wiederum nicht der Fall, so wird in Schritt 146 der Kupplungssolldruck p als der Kupplungsdruck für ein maximal anzustrebendes Antriebsmoment eingestellt. Sodann wird zum Ende der Steuerung verzweigt.

Ist die Prüfung in Schritt 144 positiv, so wird ebenfalls zum Ende der Drucksteuerung verzweigt. Dies ist auch dann der Fall, wenn die Prüfung in Schritt 142 positiv ist.

Ist die Prüfung in Schritt 140 positiv, so wird im Schritt 148 abgefragt, ob der Kupplungsdruck p kleiner als der maximale Kupplungsdruck pMAX ist. Ist dies nicht der Fall, so wird der Kupplungsdruck p auf den maximalen Kupplungsdruck gesetzt (Schritt 150).

Ist die Prüfung in Schritt 148 positiv, so wird geprüft, ob die Summe aus der vom Fahrer angeforderten Drosselklappenstellung und der von der Steuerung vorgegebenen Drosselklappenstellung gleich 0 ist (Schritt 152).

Ist diese Prüfung negativ, so wird der Kupplungssolldruck p als Summe aus dem Kupplungsadaptionsdruck p(ADAP) und dem Mindestdruck bei Rückschaltung zur Vermeidung eines Lastwechsels RSlast festgelegt. Sodann wird zum Ende des Verfahrens verzweigt.

Ist die Prüfung in 152 positiv, so wird geprüft, ob der Kupplungsdruck p größer als 0 ist (Schritt 156).

Ist dies nicht der Fall, so wird in Schritt 158 der Kupplungsdruck p gleich 0 gesetzt. Andernfalls (ja) wird zum Ende verzweigt.

Die oben beschriebene Ablaufsteuerung für den Kupplungsdruck einer Kupplung eines automatischen Getriebes stellt eine Ausführungsform dar, bei der ein Kupplungsdruck für die Kupplung eines automatischen Getriebes in Abhängigkeit von dem Motordrehzahlgradienten korrigiert wird. Durch diese Maßnahme erreicht man eine „Online"-Adaption, mit der direkt auf - auch nicht erfaßbare - Störgrößen reagiert und eine optimale Anpassung an äußere Einflüsse gewährleistet wird. Das Gesamtsystem des automatischen Getriebes wird dadurch störungsunanfälliger, was zudem zu einer Komfortsteigerung führt.

**Patentansprüche**

1.  Verfahren zur Steuerung einer Kupplung eines automatischen Getriebes, bei dem Fahrzeugbetriebsgrößen, wie das Antriebsmoment, der Drosselklappenwinkel oder die Fahrpedalstellung, die An- und Abtriebsdrehzahl des Getriebes, erfaßt und einer Steuerungseinrichtung zugeführt werden, die einen Kupplungsdruck bestimmt,
    dadurch gekennzeichnet,
    daß unter Berücksichtigung der Motordrehzahländerung ein Korrekturkupplungsdruck berechnet wird, der zusammen mit dem Kupplungsdruck einen korrigierten Soll-Kupplungsdruck ergibt.

2.  Verfahren nach Anspruch 1,
    dadurch gekennzeichnet,
    zur Berechnung des Korrekturkupplungdruckes weitere Systemdaten verwendet werden.

*100*

Ablauf der Drucksteuerung

*102* Gang= Maxgang — ja → *104* p=pmax

nein

*108* Gang> Ganganf [alt] — ja → (to p=pmax)

nein

*110* Gang= Ganganf — ja → *112* Gang=0 — ja → p=0

nein

*116* abs(ngrad(MOT)) >dnGZadap

nein → *118* p= pmax

ja

*122* abs(dn(MOT) >dnMOTadap

nein

*120* p(ADAP)=f(Nabenpos., dn(MOT), p[alt], M(Mot))

*114* p=p[alt]+pGRAD(Nabenpos.)*dt

ja

*126* Pos. Kuppln.>0 — nein

ja

*124* (nAb*i(angef.G.) >Zieldrehzahl — nein

*130* nAb*i(angef. G.)> nMOTll+nMOTdif — nein

ja

*106* p(ADAP)=0

*128* p= p(ADAP)+p(DKI, angef. Gang, n(MOT), dn(AB), M(MOT))

ja

*132* p=p(ADAP)+p(n(AB), DKI, angef. Gang, n(MOT), dn(AB), M(MOT))

*134* KUPPLUNGS NABEPOS=2 — ja → *136* p=p*i(r)* i(2)/( i(r)+ i(2))

nein

p=p*i(r)

*140* n(Ab)*i(angef.G) >n(MOT) — nein → *142* p<pMINhs(angf. G.) — nein → *144* p<p(MabSOLL) — nein → *146* p= p(MabSOLL)

ja

ja

ja

p<pMAX — nein → p=pMAX

ja

*148* DKI(Fahrer) +DKI(EML)=0 — nein → *154* p=p(ADAP)+RSlast → ENDE

*150*

ja

*152* → p>0 — nein → p=0

*156* ja → *158*

5